# EUROPEAN PATENT APPLICATION

(11) **EP 2 239 239 A1**
(43) Date of publication of application: **13.10.2010**
(21) Application number: 08750393.4
(22) Date of filing: 17.03.2008
(51) Int. Cl.: C04B 7/13

(54) **PORTLAND CEMENT TO WHICH TEXTURED POZZOLANS ARE ADDED**

(30) Priority: 16.03.2007 ES 200700700
(71) Applicant: Asociacion De Investigacíon De Industrias De La Construccíon AIDICO- Instituto Tecnológico De La Construccíon, 46980 Paterma Valencia (ES)
(72) Inventor: CLIMENT VICEDO, Verónica, 46980 Paterma, Valencia (ES); LOPEZ BUENDÍA, Angel Miguel, 46980 Paterma, Valencia (ES)
(74) Representative: Munoz Garcia, Antonio
(86) International application number: PCT/ES2008/000153
(87) International publication number: WO 2008/113879

(57) **Abstract**

The invention relates to different compounds of Portland cement to which textured pozzolans are added, said compounds being obtained by known physical atomisation, palletisation, granulation treatments or a combination of same, generating changes in the primitive global morphology of the compounds.

These texturing processes enable special agglomerates having different morphologies to be obtained: combination of a core of a defined material and a homogeneous layer which covers said core, improving the properties of the solid core constituent and facilitating the subsequent processing thereof, that is resisting the transformation of the solid aggregate from the moment of its genesis to the mixture and compaction thereof with the original cement, in order to obtain an optimum hardening speed.

This type of textured granule reduces the immediate efficacy of the pozzolana, slowing down the reactions and enabling same to last longer with greater efficacy.

## Description

### PURPOSE OF THE INVENTION

The purpose of this invention is to modify the morphology of pozzolanic compounds used as partial replacements for cements using known physical treatments, generating changes in the primitive global morphology of the compounds to modify the reaction capacity of mortars, pastes and concretes.

### BACKGROUND OF THE INVENTION

Historical outline: the use of natural cements in construction can be traced back to the time of ancient Egypt, followed later by the Greeks and Romans. These cements were natural products that were sometimes subjected to imperfect heat treatments. They can be considered intermediate materials between hydraulic limes and Portland cement.

The Romans reached a major milestone on discovering a cement that they could manufacture by mixing volcanic ash with quicklime. There was a deposit of this ash in Puteoli (known today as Pozzuoli) and as a result, this cement became known as "pozzolana cement".

In the mid 18th century, huge breakthroughs were made in terms of knowledge regarding limes due to research carried out by John Smeaton in England when charged with the reconstruction of a lighthouse at Eddystone Rock, which had been destroyed by fire.

In order to complete this coastal construction, Smeaton had to find suitable materials by experimenting with several types of limes. He noticed that more resistant mortars were achieved with limes made from limestone that contained a determined proportion of clay in its composition than those mortars made with pure limes and he also noticed that these mortars set under water, something that did not occur with traditional lime mortars of that time. This discovery advanced very little and for a long time the old mixtures of slaked lime and pozzolana were used (basis for Roman mortars.

The first patent for Portland cement dates back to 1824 and is attributed to Joseph Aspdin, a builder from Leeds (England). In the manufacturing process, a low-quality product was obtained due to a defect in burning. Charles Johnson, a contemporary of Aspdin, improved the proportions of limestone and clay, increasing the burning temperature of the kilns until sintering was achieved. The product, once ground, set better than the previous product and was given the name Portland cement because once set, it had a colour that resembled the natural stone found on the peninsula of Portland to the south of England.

Today, Portland cement has reached high levels of perfection and is the most-used industrialised construction material. It can be said that cement is the soul of concrete, with practically its entire production being used to agglutinate loose stones to create the stony material we know today as concrete.

There are basically two types of cements used in construction: common cements and special cements.

The following are common cements:

| TYPE | NAME | DESIGNATION |
|---|---|---|
| CEM I | Portland Cement | CEM I |
| CEM II | Portland Cement | CEM II/A-S |
| | with slag | CEM II/B-S |
| | Portland Cement with silica fume | CEM II/A-D |
| | | CEM II/A-P |
| | | CEM II/B-P |
| | Portland Cement with pozzolan | CEM II/A-Q |
| | | CEM II/B-Q |
| | | CEM II/A-V |
| | | CEM II/B-V |
| | Portland Cement with flv ash | CEM II/A-W |
| | | CEM II/B-W |
| | Portland Cement with calcined shale | CEM II/A-T |
| | | CEM II/B-T |
| | | CEM II/A-L |
| | | CEM II/B-L |
| | Portland Cement with limestone | CEM II/A-LL |
| | | CEM II/A-LL |
| | Portland composite cement | CEM II/A-M |
| | | CEM II/B-M |
| CEM III | Blast-furnace cement | CEM III/A |
| | | CEM III/B |
| | | CEM III/C |
| CEM IV | Pozzolanic cement | CEM IV/A |
| | | CEM IV/B |
| CEM V | Composite cement | CEM V/A |
| | | CEM V/B |

Special cements include sulphate-resistant cement, seawater-resistant cement, cement with low heat of hydration, white cements, etc.

The textured pozzolan that is the purpose of this invention, mixed with Portland cement, belongs to type CEM II: Portland Cements with additives, III: Portland Cements with slag, IV: Pozzolanic Portland Cement, and V: Composite Portland Cement. These types of cements are identified by the abbreviation CEM II, III, IV or V, followed by a slash (/), the letter indicating the sub-type (A or B), a dash (-) and the letter characterising the additive:
S: blast-furnace slag.
D: silica fume.
P: natural pozzolana.
Q: natural calcined pozzolana.
V: siliceous fly ash.
W: calcareous fly ash.
T: calcined shale.
L and LL: limestone.

As observed in the description of the known types of additives, although natural pozzolana and natural calcined pozzolana are described, Portland cement with added textured pozzolan, the object of this invention, is not described.

To date, these types of known cements, CEM II, III, IV or V, had the objective of varying the proportions of their contents, types of pozzolans and granulometries. The texturing of pozzolans makes it possible to modify and adjust the end properties of the cement with additives, simply making textural modifications as described below.

### DESCRIPTION OF THE INVENTION

This invention relates to different compounds of Portland cement to which textured pozzolans are added, said pozzolans being obtained by known physical treatments, generating changes in the primitive global morphology of the compounds.

### These treatments are as follows:

Atomisation: Atomisation is a drying process by which the suspension that has been pulverised into fine droplets enters into contact with a current of hot air to produce a solid product with a low water content. This results in roughly spherical granules that are hollow inside and very uniform being obtained, giving the atomised powder increased fluidity.

Palletisation: Palletisation relates to the formation of aggregates from a homogeneous mixture of powder and water until a paste is formed by mixing and simultaneous evaporation of the added water. Mixing is carried out by a system of rotary blades. Aggregates obtained using this system are more compact than those obtained by atomisation.

Granulation: Some very fine solids can be granulated without the addition of binders or water. Van der Waals forces are the cause of the joining between particles. Nevertheless, most fine powders require the addition of some type of binder and water to generate granules with sufficient cohesion and mechanical strength.

Granulation is carried out using rotary equipment designed for this purpose, thereby obtaining granules with morphological and mechanical characteristics according to the operating conditions used: amount and type of binder added, amount of water and its reaction speed, rotating speed of the granulating machine, etc.

These texturing processes enable special agglomerates having different morphologies to be obtained: combination of a core of a defined material and a homogeneous layer which covers said core, improving the properties of the solid core constituent and facilitating the subsequent processing thereof, that is resisting the transformation of the solid aggregate from the moment of its genesis to the mixture and compaction thereof with the original cement, in order to obtain an optimum hardening speed.

On the other hand, these treatments have two effects on the pozzolanic reaction: on one hand, it reduces the overall specific surface, and on the other hand, the formation of the granule measures the fixing of lime by the pozzolan. The smaller specific surface of the granule reduces the acceleration speed of the hardening reaction by the pozzolan while reducing the number of reaction points in the composition, with the composition not being so avid due to the lime formed in the reaction. This fact causes the pozzolanic reaction to go on developing in layers (from the outside of the granule to the inside), allows the fixing of lime to be prolonged, thereby providing high mechanical strengths to long hardening times.

This type of textured granule reduces the immediate efficacy of the pozzolana, slowing down the reactions and enabling same to last longer with greater efficacy.

Textured pozzolans obtained from the aforementioned procedures can be made up of one or more pozzolans, with different characteristics selected according to the desired or required initial or final properties of the pastes, mortars and concretes.

These compositions are as follows:
- A pre-mix of several pozzolans to give homogeneous texturing.
- Superimposed layers of several pozzolans.
- Superimposed layers of mixtures of several pozzolans.
- Any variation and/or combination of the aforementioned cases, thereby allowing greater control over hardening reactions.

Pozzolans used can come from different sources, both natural or artificial, with the main sources being the following:
- Volcanic rocks.
- Waste from combustion processes of some industries. - Waste from mining.
- Sludge from cutting and polishing glazed ceramic tiles.

Pastes, mortars and concretes prepared with cements with pozzolanic additives tend to develop high mechanical strengths to long hardening times, with such strengths being lower over the first few days than those strengths developed by analogous conventional products, as is the case of fly ash cement. This is due to the double function of the pozzolans: On the one hand they modify the hardening reaction and on the other they fix the lime released in this reaction. The speed of the pozzolanic reaction has a direct influence on the development of mechanical strengths of the hardened product.

**Laboratory tests**: In order to check the characteristics obtained by the aforementioned procedures, a series of tests was conducted at AIDICO (Instituto Tecnológico de la Construcción de Valencia), with the results being as follows:
With regard to properties given by the pozzolan texturing process compared to non-textured pozzolans, for example, texturing by atomisation of a pozzolan produces, according to studies conducted at AIDICO, a 5% increase in mechanical strengths, with this increase being obvious, even to a greater extent, from the very first days of hardening, therefore reducing the disadvantages of using this type of pozzolanic additives. This fact can be observed by analysing two samples with similar chemical compositions but with a different morphology (LR = atomised sample; LB = powdered sample). The chemical compositions of both samples are shown below:

**Table 1. Chemical analysis of samples analysed by X-ray fluorescence**

| Sample | SiO₂ | Al₂O₃ | Fe₂O₃ | MnO | MgO | CaO | Na₂O | K₂O | TiO₂ | P₂0₅ | LOI | Total |
|---|---|---|---|---|---|---|---|---|---|---|---|---|
| | (%) | (%) | (%) | (%) | (%) | (%) | (%) | (%) | (%) | (%) | (%) | (%) |
| LB | 64.85 | 18.52 | 0.76 | 0.01 | 2.71 | 0.46 | 4.68 | 1.20 | 0.69 | 0.17 | 4.97 | 99.02 |
| LR | 65.78 | 17.49 | 1.13 | 0.02 | 2.98 | 0.49 | 4.35 | 1.15 | 0.57 | 0.18 | 4.89 | 99.03 |

The sum of the potentially pozzolanic fractions in both cases exceeds 80%:
LB: SiO₂ + Al₂O₃ + Fe₂O₃ = 84.13 %
LR: SiO₂ + Al₂O₃ + Fe₂O₃ = 84.40 %

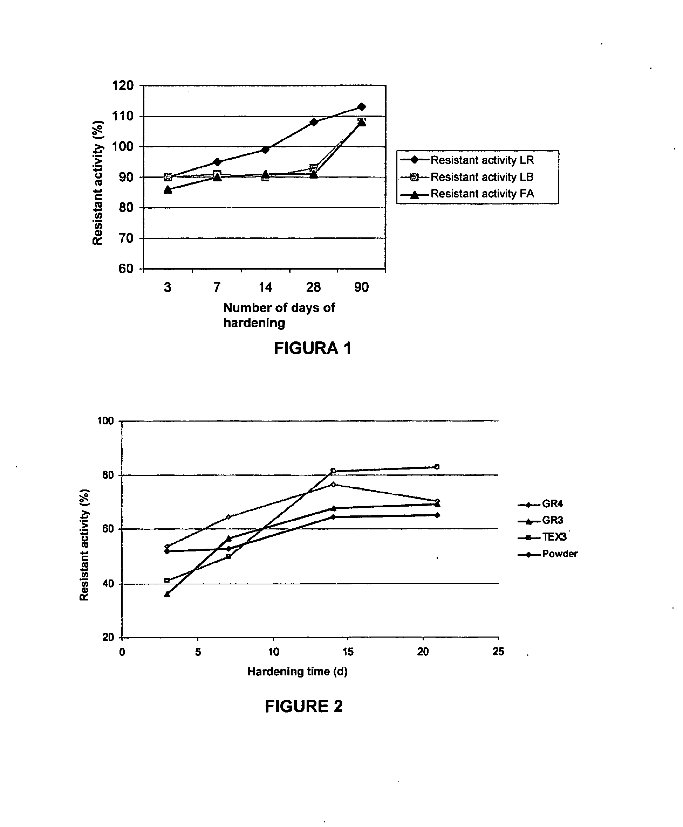

Figure 1 shows the resistant activities corresponding to fly ash (FA) and the samples studied (LR (atomised sample) and LB (powdered sample)) against the number of days of hardening. The graph shows differences and similarities existing in the development of mechanical compression strengths for a water/solid ratio of 0.5, a replacement percentage of 20% and a hardening temperature of 20°C.

### See Figure 1: Resistant activities (%) of different additives (fly ash, LR and LB) against the number of days of hardening

Additive LB follows a very similar development to fly ash, with the only noteworthy difference between the two being the fact that at a new age, the strength developed by additive LB is slightly higher than the strength developed by fly ash. Both reach their maximum after 90 days of hardening (108%), below additive LR.

Additive LR shows an intermediate behaviour between fly ash and silica fume, showing a higher mechanical strength than silica fume and a very similar strength to fly ash at a new age. Over longer times, it develops intermediate mechanical strengths between the strengths achieved by silica fume and fly ash, reaching its maximum after 90 days of hardening (113%).

It can be seen in this example how the texturing of samples with an identical chemical composition increases mechanical strengths from the very beginning.

In the following study, it can be clearly seen how the application of different texturing processes using atomisation and granulation techniques on a pozzolan (samples GR4, GR3 and TEx3) modifies the final and intermediate properties of a standard pozzolan (Powder sample). The chemical composition of this pozzolan is as follows:

**Table 2. Chemical analysis of the sample analysed by X-ray fluorescence**

| Si0₂ | Al₂O₃ | TiO₂ | Fe₂O₃ | Cr | SO₄ | CaO | MgO | Na₂O | K₂O | P₂O₅ | LOI |
|---|---|---|---|---|---|---|---|---|---|---|---|
| (%) | (%) | (%) | (%) | (%) | (%) | (%) | (%) | (%) | (%) | (%) | (%) |
| 55.3 | | | | | | | | | | | |
| | 40.30 | 2.77 | 1.22 | <0.01 | 0.04 | 0.02 | 0.06 | 0.04 | <0.1 | 0.12 | 0.40 |
| 0 | | | | | | | | | | | |

| | | | | | | | | | | | |
|---|---|---|---|---|---|---|---|---|---|---|---|
| The sum of the potentially pozzolanic fractions in this case exceeds 80%: MK: SiO₂ + Al₂O₃ + Fe₂0₃ = 96.82% See Figure 2: Resistant activities (%) of the additive (MK) subjected to different texturing treatments against the number of days of hardening | | | | | | | | | | | |

The graph shows an increase in the resistant activity of the textured samples in comparison to the non-textured sample (or powder) of an identical pozzolan. The resistant activities have been taken from mortars with a different w/c ratio in each case (obtained from the specific water demands of each additive) in order to be able to compare the end properties of each mortar. The percentage of pozzolanic replacement has been set at 20%.

It can be seen from the graph how the different texturing treatments have different effects on resistant activities and consecutively on reaction kinetics.

The different granulation treatments give parallel development curves, although with differences after short hardening times, while the atomised sample shows a completely different development curve.

The cases shown here prove that texturing has a direct or indirect influence on reaction kinetics and on the development of mechanical strengths, favouring in some cases development after shorter times.

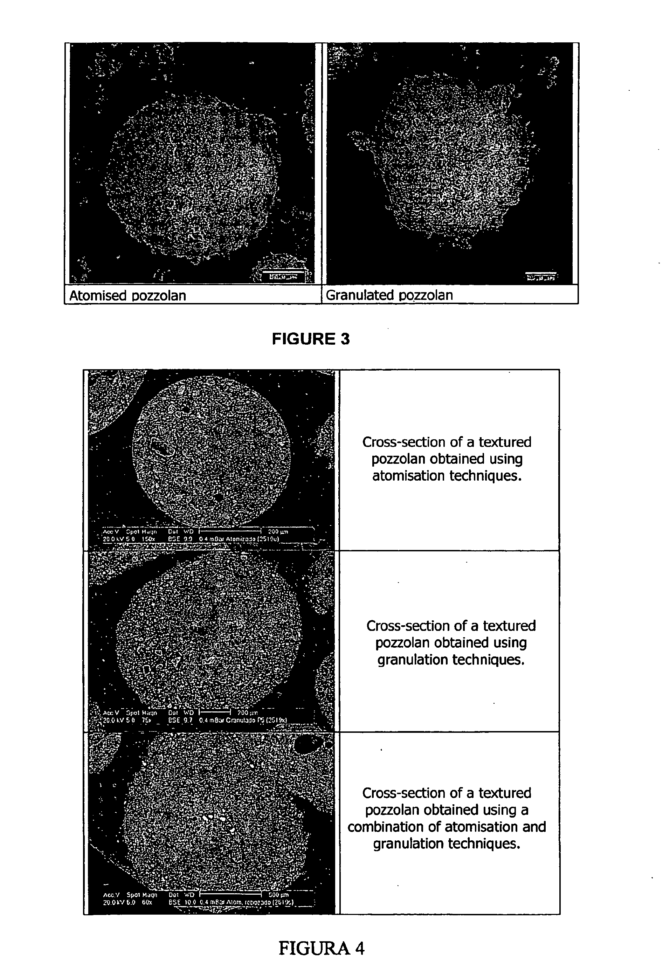

Figure 3 exhibits a pair of photographs showing details of the different texturing treatments carried out on the pozzolan being studied.

Figure 4 exhibits some photographs showing cross-sections of some textured pozzolans that will help us to understand the differences found in the development of mechanical strengths. The different layers comprising a textured pozzolan have different effects on reaction kinetics, due primarily to the differences found in their density.

### DESCRIPTION OF DRAWINGS

To complement the description of these cements with additives and in order to make it easier to understand their characteristics, a series of figures is attached that, for illustrative but not limitative purposes, show the following drawings, whose main components are the following:

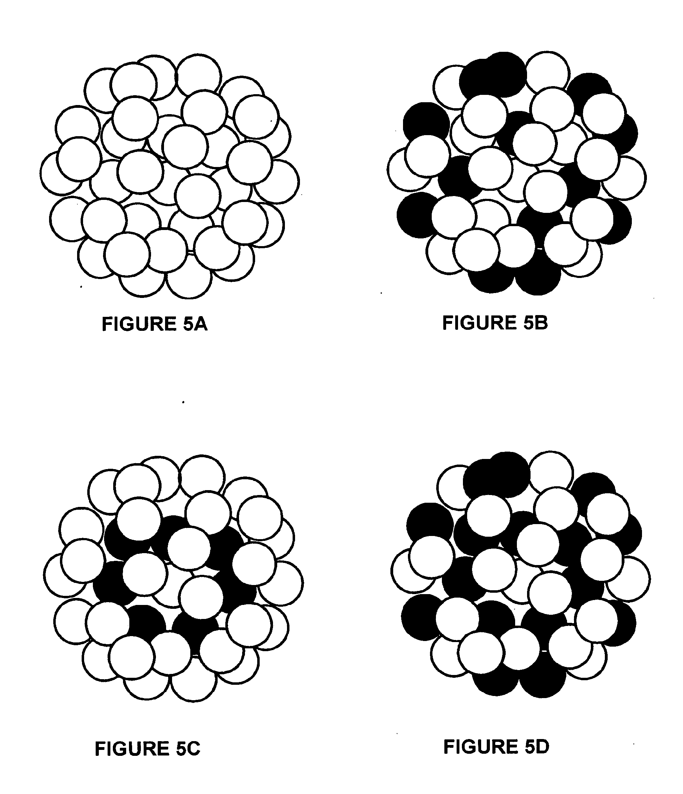

Figure 5A: Textured pozzolan comprising a single pozzolan. Figure 5B: Textured pozzolan comprising a pre-mix of several pozzolans.
Figure 5C: Textured pozzolan comprising successive layers of several pozzolans. Each layer is made up of a single pozzolan. Figure 5D: Textured pozzolan comprising successive layers of several pozzolans. Each layer comprises the pre-mix of several pozzolans.

### PREFERRED EMBODIMENT OF THE INVENTION

Of all the different types of cements with textured pozzolan additives that can be manufactured by taking this invention as a basis, the preferred embodiment is described below:
Depending on the reaction speed required, the starting point is pozzolans with a determined granulometry. For example, if natural pozzolans are used that require a pre-heat treatment (e.g. clays), after the first grinding it is necessary to make sure that the size of the particle is still suitable, so sometimes a second grinding is necessary.

The pozzolan is then subjected to the selected texturing treatment, or a combination of treatments, in order to change the morphology of the pozzolan according to the desired reaction speed. Compact aggregates tend to have slow pozzolanic reactions whereas porous aggregates tend to have fast reactions, with hollow aggregates having a shorter life span. In any case, like granulometry, the formation of aggregates shall slow down the pozzolanic reaction with regard to the reaction speed that the same pozzolan would have if it had not been subjected to the texturing treatment.

The treated pozzolan is finally ready to be added to the Portland cement, according to the proportion and optimal water/solid reaction, depending on the pozzolan used and the application for which it is to be used.

It is also worth mentioning that the textured pozzolan can be used with special cements, such as alkali-activated cements, and it can even be added directly to concrete or used to manufacture special mortars in order to give special characteristics.

Other advantages offered by the use of textured pozzolans is an improved handling of these products as:
- texturing gives the material better fluidifying properties in its dry state, making it easier to transport.
- texturing reduces the content of fines in the pozzolan and therefore reduces the emission of dust during handling.

Once the nature of this invention and a practical application thereof have been described in sufficient detail, the only thing left to add is the fact that both its form and its materials and manufacturing procedure are susceptible to modifications, provided that such modifications do not substantially affect the characteristics claimed below.

## Claims

1. Textured pozzolans obtained by known atomisation, palletisation, granulation procedures or a combination of same, mainly for use in Portland composite cement and secondly in mortars or concretes, that enable an optimum hardening speed to be obtained and the end properties of the composite cement to be adjusted, thereby improving the mechanical strength developed in the first few days of hardening and enabling high mechanical strengths to be obtained over long hardening times, **characterised** because such pozzolans take on different morphologies according to the aforementioned procedures that give them different functional characteristics to conventional pozzolans, with these morphologies being as follows:
- Textured pozzolan comprising a single pozzolan. (Fig. 5A).
- Textured pozzolan comprising a pre-mix of several pozzolans. (Fig. 5B)
- Textured pozzolan comprising successive layers of several pozzolans. Each layer is made up of a single pozzolan. (Fig. 5C).
- Textured pozzolan comprising successive layers of several pozzolans. Each layer comprises the pre-mix of several pozzolans. (Fig. 5D).

2. Textured pozzolans obtained by known atomisation, palletisation, granulation procedures or a combination of same, mainly for use in Portland composite cement and secondly in mortars or concretes, that enable an optimum hardening speed to be obtained and the end properties of the composite cement to be adjusted, thereby improving the mechanical strength developed in the first few days of hardening and enabling high mechanical strengths to be obtained over long hardening times, according to claim 1 **characterised** because the textured pozzolans obtained by these procedures can be made up of one or more pozzolans, with different characteristics selected according to the desired or required initial or end properties of the pastes, mortars and concretes.
These compositions are as follows:
- A pre-mix of several pozzolans to give homogeneous texturing.
- Superimposed layers of several pozzolans.
- Superimposed layers of mixtures of several pozzolans.
- Any variation and/or combination of the aforementioned cases.

3. Textured pozzolans obtained by known atomisation, palletisation, granulation procedures or a combination of same, mainly for use in Portland composite cement and secondly in mortars or concretes, that enable an optimum hardening speed to be obtained and the end properties of the composite cement to be adjusted, thereby improving the mechanical strength developed in the first few days of hardening and enabling high mechanical strengths to be obtained over long hardening times, according to the above claims **characterised** because the pozzolans used can come from different sources, both natural or artificial, with the main sources being the following:
- Volcanic rocks.
- Waste from combustion processes of some industries. - Waste from mining.
- Sludge from cutting and polishing glazed ceramic tiles.
